# EUROPÄISCHE PATENTSCHRIFT

(11) **EP 2 646 268 B1**
(45) Veröffentlichungstag und Bekanntmachung des Hinweises auf die Patenterteilung: **02.08.2017**
(21) Anmeldenummer: 11794683.0
(22) Anmeldetag: 01.12.2011
(51) Int. Cl.: B21D 53/02, B60H 1/22, B60H 1/00

(54) **KRAFTFAHRZEUGKLIMAANLAGE**
MOTOR VEHICLE AIR CONDITIONING SYSTEM
CLIMATISEUR DE VÉHICULE À MOTEUR

(30) Priorität: 02.12.2010 DE 102010062326
(43) Veröffentlichungstag der Anmeldung: 09.10.2013
(73) Patentinhaber: MAHLE Behr GmbH & Co. KG, 70469 Stuttgart (DE)
(72) Erfinder: LITWING, Erich, 73565 Spraitbach (DE); LINDAUER, Sascha, 73614 Schorndorf (DE); WOLF, Walter, 71570 Oppenweiler-Zell (DE)
(74) Vertreter: Grauel, Andreas
(86) Internationale Anmeldenummer: PCT/EP2011/071574
(87) Internationale Veröffentlichungsnummer: WO 2012/072775

(56) Entgegenhaltungen:
- DE-A1-102005 029 774
- DE-A1-102007 014 976
- DE-A1-102007 019 407
- DE-B3-102004 051 874
- JP-A- 2002 219 929
- US-A1- 2006 000 580

## Beschreibung

Die Erfindung betrifft eine Kraftfahrzeugklimaanlage gemäß dem Oberbegriff des Anspruches 1 und ein Verfahren zur Herstellung von Kraftfahrzeugklimaanlagen gemäß dem Oberbegriff des Anspruches 2., wie beispielsweise aus der US 2006/0000580 oder der JP 2002 219929 bekannt. Kraftfahrzeugklimaanlagen werden in Kraftfahrzeugen eingesetzt, um die einem Innenraum eines Kraftfahrzeuges zuzuführende Luft gekühlt und/oder erwärmt dem Innenraum zuführen zu können. Hierzu weist die Kraftfahrzeugklimaanlage einen Kältemittelverdampfer zum Kühlen der Luft und wenigstens eine Heizeinrichtung zum Erwärmen der Luft auf. Die wenigstens eine Heizeinrichtung kann dabei beispielsweise als ein Wärmeübertrager ausgebildet sein, der von Kühlflüssigkeit eines Verbrennungsmotors durchströmt ist und/oder als eine elektrische Widerstandsheizeinrichtung. Dabei ist es erforderlich, Kraftfahrzeugklimaanlagen mit unterschiedlichen Heizeinrichtungen herzustellen. Die Anforderungen resultieren beispielsweise aus der Antriebsart des Kraftfahrzeuges, z.B. einem Antrieb nur mit einem Verbrennungsmotor, als Hybridfahrzeug mit einem Antrieb als Verbrennungs- und Elektromotor oder als Elektrofahrzeug mit einem reinen Antrieb durch einen Elektromotor. Auch ergeben sich unterschiedliche Anforderungen für verschiedene Märkte und Klimazonen der Auslieferung des Kraftfahrzeuges. Darüber hinaus hat auch der Ausstattungsgrad des Kraftfahrzeuges einen Einfluss auf die Kraftfahrzeugklimaanlage.

Um derartige unterschiedliche Kraftfahrzeugklimaanlagen mit verschiedenen Heizeinrichtungen herstellen zu können, ist es erforderlich, auch unterschiedliche Gehäuse der Kraftfahrzeugklimaanlage herzustellen, an welchen die Heizeinrichtungen befestigt werden. Dies ist jedoch mit einem hohen Kostenaufwand verbunden, weil zur Herstellung von unterschiedlichen Gehäusen unterschiedliche Spritzgusswerkzeuge zur Herstellung eines ein- oder mehrteiligen Gehäuses mittels Spritzgießen vorgehalten werden müssen und ferner auch bei einer großen Anzahl an unterschiedlichen Gehäusen ein hoher logistischer Aufwand und Aufwand für Umrüsten erforderlich ist. Dadurch treten hohe Kosten bei der Herstellung der Kraftfahrzeugklimaanlage auf, auch deshalb, weil aufgrund der Vielzahl von unterschiedlichen Gehäusen für eine gewisse Art von Kraftfahrzeugklimaanlagen nur eine geringe Anzahl von Gehäusen hergestellt werden kann.

Die Aufgabe der vorliegenden Erfindung besteht deshalb darin, eine Kraftfahrzeugklimaanlage und ein Verfahren zur Herstellung von Kraftfahrzeugklimaanlagen zur Verfügung zu stellen, bei dem unterschiedliche Heizeinrichtungen technisch einfach mit geringen Herstellungskosten an einem Gehäuse befestigt werden können.

Diese Aufgabe wird gelöst mit einer Kraftfahrzeugklimaanlage, umfassend ein Gehäuse, ein Gebläse, wenigstens eine Heizeinrichtung, wobei die wenigstens eine Heizeinrichtung, insbesondere ausschließlich, mit wenigstens einem Adapterdeckel an dem Gehäuse befestigt ist, wobei das Gehäuse zwei von je einem Adapterdeckel verschlossene Einschuböffnungen aufweist, wobei jeder der Adapterdeckel wenigstens eine Befestigungsgeometrie zur form- und/oder kraftschlüssigen Befestigung der wenigstens einen Heizeinrichtung an dem Adapterdeckel aufweist, insbesondere die wenigstens eine Befestigungsgeometrie komplementär zu der wenigstens einen Heizeinrichtung ausgebildet ist und/oder die wenigstens eine Heizeinrichtung ein von Kühlflüssigkeit durchströmbarer Wärmeübertrager und/oder eine elektrische Widerstandsheizeinrichtung, z. B. PTC-Heizeinrichtung, ist und/oder an jedem Adapterdeckel, insbesondere einteilig an jedem Adapterdeckel, ein Trennteil zur Zonentrennung der wenigstens einen Heizeinrichtung angeordnet ist, gemäß Anspruch 1. Der wenigstens eine Adapterdeckel wird
nicht bzw. die Adapterdeckel werden nicht als Bestandteil des Gehäuses der Kraftfahrzeugklimaanlage angesehen, so dass dadurch mit einem identischen Gehäuse und unterschiedlichen Adapterdeckeln unterschiedliche Heizeinrichtungen an der Kraftfahrzeugklimaanlage, d.h. dem Gehäuse der Kraftfahrzeugklimaanlage, befestigt werden können.

Insbesondere verschließt jeder der Adapterdeckel je eine Einschuböffnung an dem Gehäuse für die wenigstens eine Heizeinrichtung, vorzugsweise fluiddicht. An der Einschuböffnung der Kraftfahrzeugklimaanlage bzw. des Gehäuses der Kraftfahrzeugklimaanlage ist ein Einschubraum von dem Gehäuse der Kraftfahrzeugklimaanlage begrenzt und in dem Einschubraum ist die wenigstens eine Heizeinrichtung angeordnet. Die wenigstens eine Heizeinrichtung kann somit durch die Einschuböffnung in den Einschubraum der Kraftfahrzeugklimaanlage bzw. des Gehäuses der Kraftfahrzeugklimaanlage eingeschoben werden und mit jedem der Adapterdeckel kann die Einschuböffnung an dem Einschubraum, vorzugsweise fluiddicht, verschlossen werden. Dadurch ist es möglich, nach dem Einschieben der wenigstens einen Heizeinrichtung in die Einschuböffnung die wenigstens eine Heizeinrichtung innerhalb des Gehäuses der Kraftfahrzeugklimaanlage fluiddicht zu verschließen, indem nach dem Einschieben der wenigstens einen Heizeinrichtung in den Einschubraum mit jedem der Adapterdeckel jeweils eine der Einschuböffnungen fluiddicht verschlossen ist.

Erfindungsgemäß weist das Gehäuse zwei von je einem Adapterdeckel verschlossene Einschuböffnungen auf. Die wenigstens eine, vorzugsweise zwei, Einschuböffnungen sind dabei beispielsweise seitlich oder oben und unten an dem Gehäuse der Kraftfahrzeugklimaanlage ausgebildet.

Erfindungsgemäß weist der wenigstens eine Adapterdeckel wenigstens eine Befestigungsgeometrie zur form- und/oder kraftschlüssigen Befestigung der wenigstens einen Heizeinrichtung an dem Adapterdeckel auf, insbesondere ist die wenigstens eine Befestigungsgeometrie komplementär zu der wenigstens einen Heizeinrichtung ausgebildet und/oder die wenigstens eine Heizeinrichtung ist ein von Kühlflüssigkeit durchströmbarer Wärmeübertrager und/oder eine elektrische Widerstandsheizeinrichtung, z.B. PTC-Heizeinrichtung, und/oder an dem wenigstens einen Adapterdeckel ist, insbesondere einteilig, ein Trennteil zur Zonentrennung der wenigstens einen Heizeinrichtung angeordnet. Der Adapterdeckel weist unterschiedliche Befestigungsgeometrien zur Befestigung von unterschiedlichen Heizeinrichtungen an dem Adapterdeckel auf. Dabei werden als Befestigungsgeometrien des Adapterdeckels auch Einsätze aufgefasst, welche an dem Adapterdeckel befestigt sind zur Befestigung von verschiedenen Heizeinrichtungen an dem Adapterdeckel durch eine mittelbare Befestigung mittels des Einsatzes an dem übrigen Adapterdeckel. Mit dem Trennteil kann beispielsweise eine zweizonige Abtrennung der wenigstens einen Heizeinrichtung in einen linken Teil und in einen rechten Teil ermöglicht werden oder bei einer vierzonigen Kraftfahrzeugklimaanlage eine Zonentrennung in einen vorderen linken, einen vorderen rechten, einen hinteren linken und einen hinteren rechten Bereich bzw. Zone erreicht werden.

Erfindungsgemäßes Verfahren zur Herstellung von Kraftfahrzeugklimaanlagen mit unterschiedlichen Heizeinrichtungen mit den Schritten: zur Verfügung stellen eines Gehäuses, Befestigen von unterschiedlichen Heizeinrichtungen mit einer unterschiedlichen Größe und/oder Form an dem Gehäuse, wobei die unterschiedlichen Heizeinrichtungen an einem identischen Gehäuse befestigt werden, ist gemäß Anspruch 2 ausgestaltet.

In einer Variante wird bei der Herstellung einer Kraftfahrzeugklimaanlage wenigstens eine Heizeinrichtung in eine Einschuböffnung an dem Gehäuse eingeführt und anschließend wird die wenigstens eine Heizeinrichtung an dem Gehäuse befestigt.

Zweckmäßig wird bei der Herstellung einer Kraftfahrzeugklimaanlage die wenigstens eine Heizeinrichtung an dem Gehäuse befestigt, indem die wenigstens eine Heizeinrichtung, insbesondere form- und/oder kraftschlüssig, an einer Befestigungsgeometrie jedes der Adapterdeckel befestigt wird und der Adapterdeckel wird an dem Gehäuse befestigt und/oder bei der Herstellung einer Kraftfahrzeugklimaanlage wird jede der zwei Einschuböffnungen mit jeweils einem der Adapterdeckel, vorzugsweise fluiddicht, verschlossen.

In einer weiteren Ausführungsform wird bei der Herstellung einer Kraftfahrzeugklimaanlage die wenigstens eine Heizeinrichtung mit zwei Adapterdeckeln an dem Gehäuse befestigt und mit den zwei Adapterdeckeln werden, vorzugsweise fluiddicht, zwei Einschuböffnungen des Gehäuses verschlossen.

Insbesondere werden Adapterdeckel mit unterschiedlichen Befestigungsgeometrien und identischen Befestigungsschnittstellen zur Verfügung gestellt und/oder unterschiedliche Heizeinrichtungen werden mit unterschiedlichen Adapterdeckeln an dem Gehäuse befestigt und die unterschiedlichen Adapterdeckel weisen eine unterschiedliche Befestigungsgeometrie auf.

In einer weiteren Ausgestaltung werden die unterschiedlichen Adapterdeckel mit einer Befestigungsschnittstelle an einer identischen Gegenbefestigungsschnittstelle an dem identischen Gehäuse befestigt und die Befestigungsschnittstellen der unterschiedlichen Adapterdeckel sind identisch. Die Befestigungsschnittstelle bzw. Gegenbefestigungsschnittstelle ist dabei beispielsweise als eine Nut-Feder-Verbindung oder als eine Schnittstelle mit einem ebenen Auflagering, z.B. mit einer zwischen beiden Auflageringen angeordneten Dichtung, ausgebildet.

In einer zusätzlichen Ausgestaltung umfasst die Kraftfahrzeugklimaanlage einen Aktuator, z. B. einen Elektromotor oder ein Elektromagnet, und ein Mechanismus oder ein Getriebe und der Aktuator ist mit wenigstens einer Luftleiteinrichtung mechanisch (mittels des Mechanismus oder des Getriebes) verbunden, so dass die wenigstens eine Luftleiteinrichtung mittels des Mechanismus oder Getriebes von dem Aktuator bewegbar ist.

In einer weiteren Variante umfasst die Kraftfahrzeugklimaanlage einen Kältemittelverdampfer und/oder einen Luftfilter.

Zweckmäßig ist das Gehäuse der Kraftfahrzeugklimaanlage ein- oder mehrteilig.

In einer weiteren Ausgestaltung weist die Kraftfahrzeugklimaanlage wenigstens eine Luftleiteinrichtung, z. B. wenigstens eine Luftklappe oder ein Rollo, auf, um die Menge der durch einen Luftkanal leitbaren Menge an Luft zu steuern.

Vorzugsweise weist die Kraftfahrzeugklimaanlage wenigstens einen Luftkanal, insbesondere einen Frischluftkanal und/oder den Umluftkanal und/oder den Zuführungskanal, zum Durchleiten von Luft auf.

Insbesondere besteht das Gehäuse der Kraftfahrzeugklimaanlage wenigstens teilweise aus Kunststoff.

Zweckmäßig ist der wenigstens eine Luftkanal von einer Wandung des Gehäuses begrenzt.

In einer weiteren Ausgestaltung weist der Aktuator eine Positionsermittlungseinrichtung zur Erfassung der Lage des Mechanismus, z. B. einer Welle, auf.

Insbesondere ist die Positionsermittlungseinheit mit einer Steuerungseinheit für die Kraftfahrzeugklimaanlage verbunden und mittels der von der Positionsermittlungseinheit erfassten Daten ist der Aktuator steuerbar zur Erzielung einer bestimmten Lage des Mechanismus bzw. der wenigstens einen Luftleiteinrichtung.

Im Nachfolgenden wird ein Ausführungsbeispiel der Erfindung unter Bezugnahme auf die beigefügten Zeichnungen näher beschrieben. Es zeigt:
- Fig. 1: eine perspektivische Ansicht einer Kraftfahrzeugklimaanlage,
- Fig. 2: eine Seitenansicht der Kraftfahrzeugklimaanlage gemäß Fig. 1,
- Fig. 3: einen vertikalen Schnitt der Kraftfahrzeugklimaanlage gemäß Fig. 1,
- Fig. 4: eine perspektivische Ansicht der Adapterdeckel in einem ersten Ausführungsbeispiel der Kraftfahrzeugklimaanlage gemäß Fig. 1,
- Fig. 5: eine perspektivische Ansicht der Adapterdeckel in einem zweiten Ausführungsbeispiel in einer Ansicht von einer anderen Seite und
- Fig. 6: eine perspektivische Ansicht zweier Heizeinrichtungen, die an den Adapterdeckeln gemäß Fig. 4 befestigt sind bzw. zwei Heizeinrichtungen mit den dazugehörigen Adapterdeckeln, welche vorteilhaft ein austauschbares Thermomodul bilden.

Eine Kraftfahrzeugklimaanlage 1 dient dazu, gekühlte und/oder erwärmte Luft einem Innenraum eines Kraftfahrzeuges zuzuführen. Innerhalb eines ein- oder mehrteiligen Gehäuses 2 aus thermoplastischem Kunststoff ist ein Gebläse, ein Luftfilter, ein Kältemittelverdampfer (nicht dargestellt) und wenigstens eine Heizeinrichtung 3 angeordnet. Dabei wird die Luft von dem Gebläse entweder von einer Frischlufteinlassöffnung und/oder von einer Umlufteinlassäffnung angesaugt. An der Frischlufteinlassöffnung wird die Luft aus der Umgebung des Kraftfahrzeuges angesaugt und an der Umlufteinlassöffnung wird die Luft aus dem Innenraum des Kraftfahrzeuges angesaugt. Mit einer Umluftklappe als Luftleiteinrichtung kann gesteuert und/oder geregelt werden wie viel Luft durch die Frischlufteinlassöffnung und/oder die Umlufteinlassöffnung von dem Gehäuse angesaugt wird. Dabei begrenzt das Gehäuse 2 bzw. Wandungen des Gehäuses 2 wenigstens einen Luftkanal zum Durchleiten von Luft. Innerhalb dieses Luftkanales ist in Strömungsrichtung der Luft nach dem Gebläse ein Luftfilter oder alternativ ist der Luftfilter vor dem Gebläse angeordnet und der Költemittelverdampfer angeordnet. Nach dem Durchleiten der Luft durch den Kältemittelverdampfer und einem optionalen Kühlen der Luft an dem Kältemittelverdampfer, sofern ein Kältekreis mit einem Verdichter und einem Kondensator in Betrieb ist, kann die Luft an wenigstens einer Heizeinrichtung 3 erwärmt werden. Zwei Heizeinrichtungen 3 sind dabei als ein von Kühlflüssigkeit eines Verbrennungsmotors durchströmter Wärmeübertrager 4 und als eine elektrische Widerstandsheizeinrichtung 5, d.h. PTC-Heizeinrichtung 6, ausgebildet. Nach dem Durchströmen der von dem Gebläse geförderten Luft durch den Wärmeübertrager 4 und die elektrische Widerstandsheizeinrichtung 5 strömt die Luft aus wenigstens einer Luftauslassöffnung am Gehäuse 2 aus der Kraftfahrzeugklimaanlage 1 aus. Als Luftauslassöffnungen sind beispielsweise eine Defrostluftauslassöffnung zur Zuführung von Luft zu einer Windschutzscheibe, eine Fußraumluftauslassöffnung zur Zuführung von Luft in den Fußraum des Innenraumes des Kraftfahrzeuges und/oder einer Armaturentafelluftauslass-öffnung zur Zuführung von Luft im Bereich der Armaturentafel in den Innenraum des Kraftfahrzeuges vorgesehen.

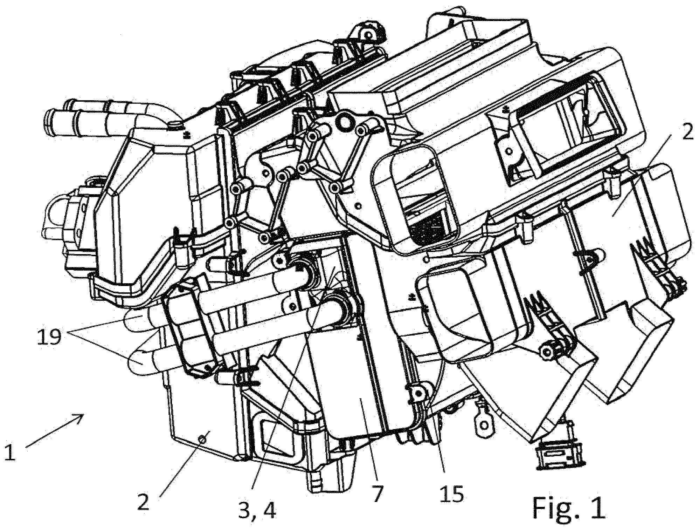

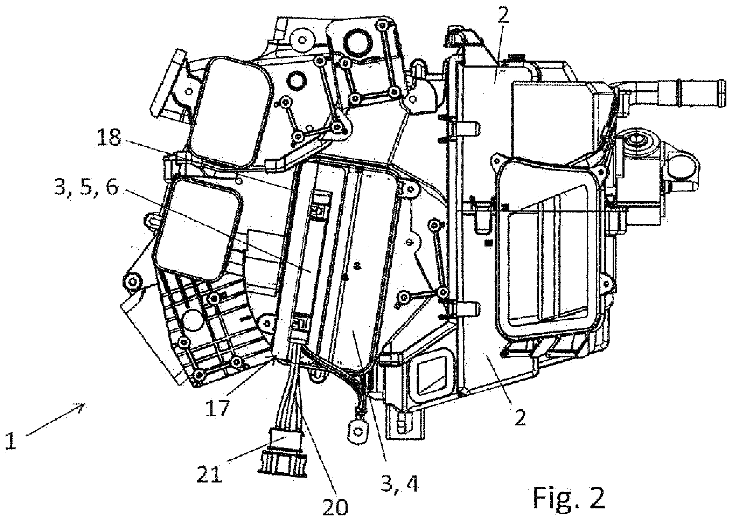

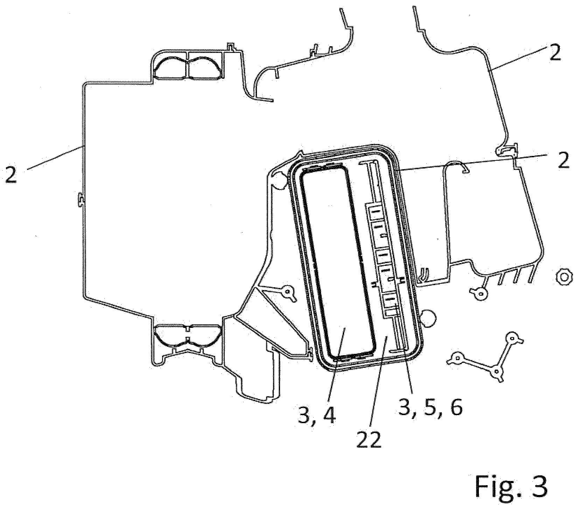

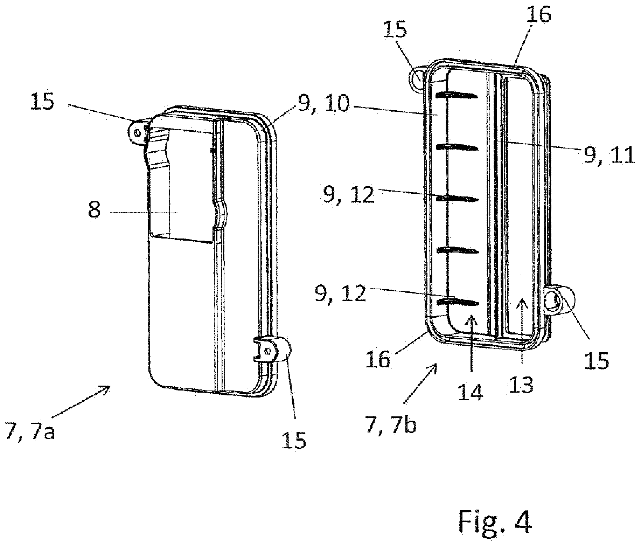

Das Gehäuse 2 der Kraftfahrzeugklimaanlage 1 begrenzt einen Einschubraum 22 für den Wärmeübertrager 4 und die elektrische Widerstandsheizeinrichtung 5. In Fig. 3 ist dabei ein vertikaler Schnitt durch die Kraftfahrzeugklimaanlage 1 in einer Längsrichtung des Kraftfahrzeuges dargestellt. Dabei sind aus Vereinfachungsgründen in Fig. 3 von der Kraftfahrzeugklimaanlage 1 nur das Gehäuse 2 und die beiden Heizeinrichtungen 3 dargestellt. Der Einschubraum 22 verläuft somit in Querrichtung der Kraftfahrzeugklimaanlage 1 und endet mit einer linken Einschuböffnung 17 an der linken Seite der Kraftfahrzeugklimaanlage 1 (die linke Einschuböffnung 17 ist in Fig. 1 von einem linken Adapterdeckel 7a als Adapterdeckel 7 verschlossen) und die rechte Einschuböffnung 17 ist in der Seitenansicht der Kraftfahrzeugklimaanlage 1 in Fig. 2 dargestellt. Die rechte Einschuböffnung 17 kann dabei von einem rechten Adapterdeckel 7b verschlossen werden (Fig. 4).

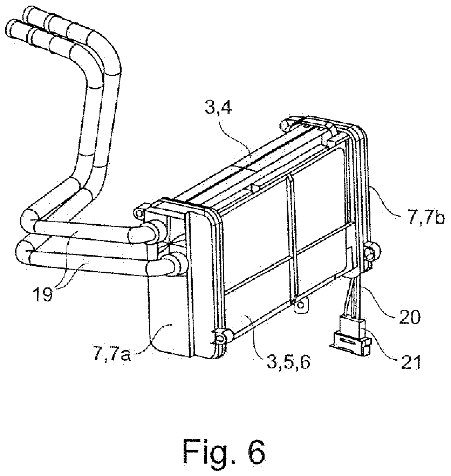

Die beiden Adapterdeckel 7 aus thermoplastischem Kunststoff weisen eine Wandung auf und am Rand bzw. am Ende dieser Wandung ist ein vollständig umlaufender Ringsteg 10 als Befestigungsgeometrie 9 ausgebildet. Ferner sind an der Wandung der beiden Adapterdeckel 7 auch jeweils ein Steg 11 vorhanden. Der Ringsteg 10 und der Steg 11 begrenzen dabei an beiden Adapterdeckel 7 im ersten Ausführungsbeispiel gemäß Fig. 4 eine erste Aufnahmeschale 13 und eine zweite Aufnahmeschale 14. An der zweiten Aufnahmeschale 14 sind ferner auch Rippen 12 sowohl an der Wandung als auch an dem Ringsteg 10 ausgebildet. Jeder Adapterdeckel 7 ist ferner mit zwei Befestigungslaschen 15 versehen. Die Befestigungslaschen 15 weisen dabei Bohrungen auf und mittels dieser Bohrungen sowie der Befestigungslaschen 15 können die beiden Adapterdeckel 7 mit zwei Schrauben (nicht dargestellt) am Gehäuse 2 der Kraftfahrzeugklimaanlage 1 angeschraubt werden. Der Ringsteg 10, der Steg 11 und die Rippen 12 bilden somit eine Befestigungsgeometrie 9 zur Befestigung bzw. Fixierung des Wärmeübertragers 4 und der elektrischen Widerstandsheizeinrichtung 5 an den beiden Adapterdeckeln 7. Dabei wird die kleinere elektrische Widerstandsheizeinrichtung 5 an der kleineren ersten Aufnahmeschale 13 befestigt und der größere Wärmeübertrager 4 an der größeren zweiten Aufnahmeschale 14. Die Wandung des linken Adapterdeckels 7 ist mit einer Öffnung 8 versehen. Durch diese Öffnung 8 können Leitungen 19 für Kühlflüssigkeit durch den Adapterdeckel 7 geführt werden (Fig. 6). Zur Versorgung der elektrischen Widerstandsheizeinrichtung 5 mit elektrischem Strom ist dieser mit Stromkabeln 20 sowie einem Stecker 21 versehen. Die Stromkabel 20 sind dabei durch eine nicht dargestellte Aussparung an dem Gehäuse 2 im Bereich einer Gegenbefestigungsschnittstelle 18 an dem Gehäuse 2 von dem Einschubraum 22 in die Umgebung der Kraftfahrzeugklimaanlage bzw. außerhalb des Gehäuses 2 geführt. Dabei erfolgt die Durchführung der Stromkabel 20 durch das Gehäuse 2 fluiddicht.

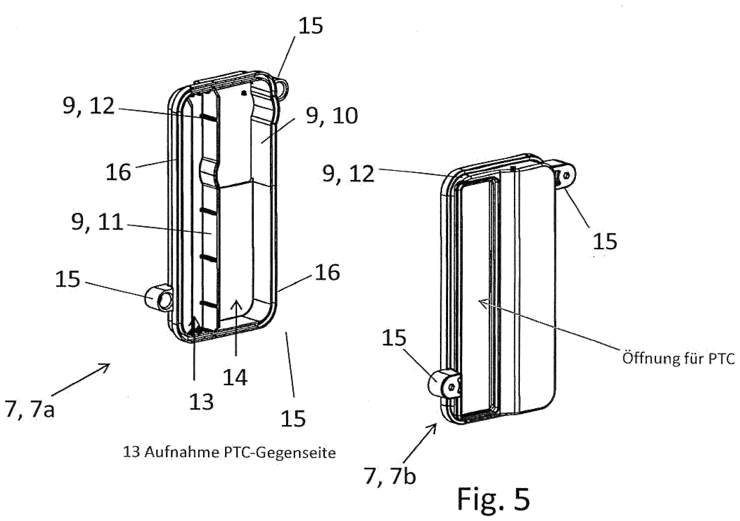

Dabei werden die Stromkabel aus dem Deckel der PTC-Heizung geführt und der PTC-Kopf verschließt die Öffnung in Fig. 5.

Die beiden Adapterdeckel 7 weisen eine Befestigungsschnittstelle 16 am Ende des Ringsteges 10 auf. Die Befestigungsschnittstelle 16 an den Adapterdeckeln 7 und die Gegenbefestigungsschnittstelle 18 am Gehäuse 2, d.h. an den beiden Einschuböffnungen 17 des Gehäuses 2, sind dabei als Nut-Feder-Verbindung ausgebildet. Die Befestigungsschnittstelle 16 an dem Adapterdeckel 7 ist eine Nut und die Gegenbefestigungsschnittstelle 18 an dem Gehäuse 2 ist eine Feder, die in die Nut an dem Adapterdeckel 7 eingreift. Dabei ist in der Nut des Adapterdeckels 7 eine nicht dargestellte vollständig umlaufende Dichtung, z. B. O-Ring-Dichtung, angeordnet, falls dies erforderlich sein sollte. Alternativ kann auch die Nut-Feder-Verbindung auch bereits ausreichend dicht ausgebildet sein. Bei der Herstellung der Kraftfahrzeugklimaanlage 1 sind zunächst beide Einschuböffnungen 17 an dem Einschubraum 22 geöffnet, d.h. nicht von den beiden Adapterdeckeln 7 verschlossen. Zur Befestigung der beiden Heizeinrichtungen 3 an dem Gehäuse 2 der Kraftfahrzeugklimaanlage 1 wird zunächst eine Einschuböffnung 17 mit einem Adapterdeckel 7 fluiddicht verschlossen und mittels zweier Schrauben wird der Adapterdeckel 7 an dem Gehäuse 2 befestigt. Anschließend wird durch die andere noch geöffnete Einschuböffnung 17 sowohl der Wärmeübertrager 4 als auch die elektrische Widerstandsheizeinrichtung 5 in den Einschubraum 22 eingeführt und dabei der Wärmeübertrager 4 in Eingriff mit der zweiten Aufnahmeschale 14 des bereits befestigten Adapterdeckels 7 gebracht und die elektrische Widerstandsheizeinrichtung 5 in Eingriff mit der ersten Aufnahmeschale 13 an dem bereits befestigten Adapterdeckel 7 gebracht. Anschließend kann auch der zweite Adapterdeckel 7 an der noch geöffneten Einschuböffnung 17 an dem Gehäuse 2 mit den beiden Schrauben befestigt werden, so dass beide Einschuböffnungen 17 fluiddicht von den beiden Adapterdeckeln 7 verschlossen sind. Auch an dem zweiten befestigten Adapterdeckel 7 ist der Wärmeübertrager 4 an der zweiten Aufnahmeschale 14 befestigt und die elektrische Widerstandsheizeinrichtung 5 an der ersten Aufnahmeschale 13 befestigt. Dabei ist die Geometrie des Wärmeübertragers 4 komplementär zu der zweiten Aufnahmeschale 14 ausgebildet und die Geometrie der elektrischen Widerstandsheizeinrichtung 5 ist komplementär zu der ersten Aufnahmeschale 13 der beiden Adapterdeckel 7 ausgebildet. Dadurch entsteht eine form- und/oder kraftschlüssige Verbindung zwischen den beiden Adapterdeckeln 7 und den beiden Heizeinrichtungen 3. In Fig. 6 ist eine derartige perspektivische Ansicht der beiden Heizeinrichtungen 3, welche an den Adapterdeckeln 7 befestigt sind, dargestellt ohne dem Gehäuse 2 bzw. der übrigen Kraftfahrzeugklimaanlage 1. Die Befestigungsgeometrien 9 an dem linken und rechten Adapterdeckel 7 können dabei auch unterschiedlich ausgebildet sein.

In Fig. 5 ist ein zweites Ausführungsbeispiel der beiden Adapterdeckel 7 dargestellt. Im Nachfolgenden werden im Wesentlichen nur die Unterschiede zu dem ersten Ausführungsbeispiel der beiden Adapterdeckel 7 gemäß Fig. 4 beschrieben. Die Adapterdeckel in Fig. 5 unterscheiden sich von den Adapterdeckeln in Fig. 4 lediglich dadurch, dass die Befestigungsgeometrie 9 eine andere Form bzw. Geometrie aufweist. Dadurch können in gleicher Weise wie oben beschrieben mit den beiden Adapterdeckeln 7 gemäß Fig. 5 andere Heizeinrichtungen 3 an einem sonst im Übrigen identischen Gehäuse 2 befestigt werden. Die in Fig.5 dargestellten Adapterdeckel 7 weisen dabei die gleiche Befestigungsschnittstelle 16 auf, wie die beiden in Fig. 4 dargestellten Adapterdeckel 7. Dadurch sind zur Befestigung von anderen Heizeinrichtungen 3 in dem Einschubraum 22 des Gehäuses 2 an dem Gehäuse 2 keinerlei Veränderungen erforderlich und es können mit dem identischen Gehäuse 2, lediglich unter Verwendung von unterschiedlichen Adapterdeckeln 7, andere Heizeinrichtungen 3 innerhalb des Einschubraumes 22 befestigt werden. Die Heizeinrichtungen 3 unterscheiden sich beispielsweise dadurch, dass die elektrische Widerstandsheizeinrichtung 5 für einen Niederspannungs- oder einen Hochspannungsbereich ausgelegt ist oder die Oberfläche des Wärmeübertragers 4 unterschiedliche Größen aufweisen. Als Befestigungsschnittstelle 16 bzw. Gegenbefestigungsschnittstelle 18 kann anstelle der in Fig.4 und 5 dargestellten Nut-Feder-Verbindung auch ein ebener vollständig umlaufender Auflagerand sowohl an dem Adapterdeckel 7 als auch an dem Gehäuse 2 im Bereich der beiden Einschuböffnungen 17 verwendet werden.

Insgesamt betrachtet sind mit der erfindungsgemäßen Kraftfahrzeugklimaanlage 1 wesentliche Vorteile verbunden. Bei der Herstellung der Kraftfahrzeugklimaanlage 1 können an dem identischen Gehäuse 2 unterschiedliche Heizeinrichtungen 3 befestigt werden, indem diese mit verschiedenen Adapterdeckeln 7 mit unterschiedlichen Befestigungsgeometrien 9 mittelbar an dem Gehäuse 2 fixiert werden. Dadurch können bei der Herstellung der Kraftfahrzeugklimaanlage 1 Kosten gespart werden, weil für unterschiedliche Kraftfahrzeugklimaanlagen 1 mit verschiedenen Heizeinrichtungen 3 ein identisches Gehäuse 2 verwendet werden kann.

Dabei kann es durchaus vorteilhaft sein, wenn eine Zonentrennung durch Trennwände erfolgen kann und deren Abdichtung vorgenommen werden kann.
Varianten von Heizeinrichtungen oder Varianten der Zonentrennung können durch die Verwendung von verschiedenen Adapter-Deckeln generiert werden.

Weiterhin können Varianten von Klimaanlagen über Thermomodule erzeugt werden. Je nach Klimaanlagenkonzept und Aufbau kann das Thermomodul auch noch Luftleit- und/oder Absperrelemente (z.B. Klappen, Jalousien, Rollbänder etc.) beinhalten.

Der Deckel ist beispielsweise für Servicearbeiten nach links oder rechts ausbildbar z.B. bei Linkslenker (LL) oder Rechtslenker (RL)-Varianten, z.B. PTC-Service für LL nach links und für RL nach rechts bei Verwendung von identischem PTC-Zuheizer.

Dadurch kann vorteilhaft die Verwendung von Standard-Komponenten z.B. Einheits-PTC-Zuheizer, für verschiedene Varianten durch Anpassung an die Klimaanlagen durch die individuelle Deckelgestaltung erzielt werden.

Auch kann eine Verbesserung der Zonentrennung bei zwei- und mehrzonigen Anlagen bei Verwendung von Standard-Bauteilen erreicht werden.

Beispielsweise können Dichtelemente verwendet werden, die an dem einen Wärmetauscher befestigt oder an und zwischen den beiden Wärmeübertragern montiert werden.

Als Einschub kann die Vorrichtung vorteilhaft als vormontierte Einheit mit vormontierten oder am Wärmetauscher integrierten Zonentrennelementen von einer Seite verwendet werden.

Elemente zur Abdichtung einer Zonentrennung können wahlweise an einem oder beiden Adapterdeckeln integriert sein. Sie können aber auch auf dem oder auf den Wärmeübertragern montiert werden, indem Sie beispielsweise in die Rippen eindringen.

Grundsätzlich ist es zweckmäßig, wenn die Wärmeübertrager als Modul bzw. in einem Modul darstellbar sind. Dabei können der Wärmeübertrager 4, auch Heizkörper genannt, in verschiedenen Dimensionierungen verwendbar sein. In Kombination mit einer Widerstands - oder PTC-Heizeinrichtung 5,6. Die Widerstands - oder PTC-Heizeinrichtung 5,6 kann dabei auch mit unterschiedlichen Leistungsstufen verwendbar sein, je nach Dimensionierung und Motorisierung des Fahrzeugs, für welches er eingesetzt werden wird. So kann eine Modularisierung dazu führen, dass als verschiedene Module verschiedene Bestückungen mit Wärmeübertragern 4 und Widerstands- oder PTC-Heizeinrichtungen vorgesehen werden. Dabei kann es bei der Vorsehung verschiedener Wärmeübertrager mit verschiedenen Leistungsstufen vorteilhaft sein, wenn die Anordnung im Modul derart erfolgt, dass sie jeweils in der gleichen Referenzebene mit ihrer dem Luftstrom zugeordneten Eingangsstirnfläche liegen.

Auch kann das Heizmodul dadurch erweitert werden, dass auch Klappen in das Modul integriert werden. Auch könnten dazu alternativ oder zusätzlich Antriebe für die Klappen integriert werden. Zusätzlich oder alternativ zu einer Klappe kann auch eine Leitwand für die Leitung einer Strömung vorgesehen sein. Dabei kann sich die Anzahl der Klappen und/oder Leitwände nach der Anzahl der Zonen in der Klimaanlage richten.

Dabei ist es auch vorteilhaft, wenn bei verschiedener Bestückung des Moduls mit Wärmeübertrager und/oder PTC-Heizeinrichtung eine ähnliche Regelcharakteristik resultiert.

Weiterhin ist es ggf. zweckmäßig, wenn vorgesehene Deckel auch als Halteelemente für Antriebe dienen können.

### Bezugszeichenliste

- 1: Kraftfahrzeugklimaanlage
- 2: Gehäuse
- 3: Heizeinrichtung
- 4: Wärmeübertrager von Kühlflüssigkeit durchströmt
- 5: Elektrische Widerstandsheizeinrichtung
- 6: PTC-Heizeinrichtung
- 7: Adapterdeckel, 7a, 7b
- 8: Öffnung in Adapterdeckel
- 9: Befestigungsgeometrie
- 10: Ringsteg
- 11: Steg
- 12: Rippen
- 13: Erste Aufnahmeschale
- 14: Zweite Aufnahmeschale
- 15: Befestigungslasche
- 16: Befestigungsschnittstelle
- 17: Einschuböffnung
- 18: Gegenbefestigungsschnittstelle
- 19: Leitung für Kühlflüssigkeit
- 20: Stromkabel für elektrische Widerstandsheizeinrichtung
- 21: Stecker an Stromkabel
- 22: Einschubraum

## Patentansprüche

1. Kraftfahrzeugklimaanlage (1), umfassend
- ein Gehäuse (2),
- ein Gebläse,
- wenigstens eine Heizeinrichtung (3),
wobei die wenigstens eine Heizeinrichtung (3) ausschließlich mit wenigstens einem Adapterdeckel (7) an dem Gehäuse (2) befestigt ist, wobei der wenigstens eine Adapterdeckel (7) je eine Einschuböffnung (17) an dem Gehäuse (2) für die wenigstens eine Heizeinrichtung (3), vorzugsweise fluiddicht, verschließt, **dadurch gekennzeichnet, dass** das Gehäuse (2) zwei von je einem Adapterdeckel (7) verschlossene Einschuböffnungen (17) aufweist, wobei jeder der Adapterdeckel (7) wenigstens eine Befestigungsgeometrie (9) zur form- und/oder kraftschlüssigen Befestigung der wenigstens einen Heizeinrichtung (3) an dem Adapterdeckel (7) aufweist, insbesondere die wenigstens eine Befestigungsgeometrie (9) komplementär zu der wenigstens einen Heizeinrichtung (3) ausgebildet ist und/oder die wenigstens eine Heizeinrichtung (3) ein von Kühlflüssigkeit durchströmbarer Wärmeübertrager (4) und/oder eine elektrische Widerstandsheizeinrichtung (5), z. B. PTC-Heizeinrichtung (6), ist und/oder an jedem Adapterdeckel (7), insbesondere einteilig an jedem Adapterdeckel (7), ein Trennteil zur Zonentrennung der wenigstens einen Heizeinrichtung (3) angeordnet ist.

2. Verfahren zur Herstellung von Kraftfahrzeugklimaanlagen (1) nach Anspruch 1 mit unterschiedlichen Heizeinrichtungen (3), mit den Schritten:
- zur Verfügung stellen eines Gehäuses (2),
- Befestigen von unterschiedlichen Heizeinrichtungen (3) mit einer unterschiedlichen Größe und/oder Form an dem Gehäuse (2),
**dadurch gekennzeichnet, dass** die unterschiedlichen Heizeinrichtungen (3) an einem identischen Gehäuse (2) befestigt werden, wobei bei der Herstellung einer Kraftfahrzeugklimaanlage (1) wenigstens eine Heizeinrichtung (3) in eine Einschuböffnung (17) an dem Gehäuse (2) eingeführt wird und anschließend die wenigstens eine Heizeinrichtung (3) an dem Gehäuse (2) befestigt wird und wobei bei der Herstellung einer Kraftfahrzeugklimaanlage (1) die wenigstens eine Heizeinrichtung (3) an dem Gehäuse (2) befestigt wird, indem die wenigstens eine Heizeinrichtung (3), insbesondere form- und/oder kraftschlüssig, an einer Befestigungsgeometrie (9) zweier Adapterdeckel (7) befestigt wird und die beiden Adapterdeckel (7) an dem Gehäuse (2) befestigt werden und/oder bei der Herstellung einer Kraftfahrzeugklimaanlage (1) zwei Einschuböffnungen (17) mit jeweils einem Adapterdeckel (7), vorzugsweise fluiddicht, verschlossen werden, wobei bei der Herstellung einer Kraftfahrzeugklimaanlage (1) die wenigstens eine Heizeinrichtung (3) mit zwei Adapterdeckeln (7) an dem Gehäuse (2) befestigt wird.

3. Verfahren nach Anspruch 2, **dadurch gekennzeichnet, dass** Adapterdeckel (7) mit unterschiedlichen Befestigungsgeometrien (9) und identischen Befestigungsschnittstellen (16) zur Verfügung gestellt werden und/oder unterschiedliche Heizeinrichtungen (3) mit unterschiedlichen Adapterdeckeln (7) an dem Gehäuse (2) befestigt werden und die unterschiedlichen Adapterdeckel (7) eine unterschiedliche Befestigungsgeometrie (9) aufweisen.

4. Verfahren nach Anspruch 3, **dadurch gekennzeichnet, dass** die unterschiedlichen Adapterdeckel (7) mit einer Befestigungsschnittstelle (16) an einer identischen Gegenbefestigungsschnittstelle (18) an dem identischen Gehäuse (2) befestigt werden und die Befestigungsschnittstellen (16) der unterschiedlichen Adapterdeckel (7) identisch sind.

## Claims

1. A vehicle air-conditioning system (1), comprising
- a housing (2),
- a fan,
- at least one heating device (3),
wherein the at least one heating device (3) is fastened to the housing (2) exclusively by means of at least one adapter cover (7), wherein the at least one adapter cover (7) closes off, preferably in a fluid-tight manner, in each case one insertion opening (17) on the housing (2) for the at least one heating device (3), **characterised in that** the housing (2) has two insertion openings (17) which are closed off by in each case one adapter cover (7), wherein each one of the adapter covers (7) has at least one fastening geometry (9) for the positive and/or non-positive fastening of the at least one heating device (3) to the adapter cover (7), in particular the at least one fastening geometry (9) is of complementary design to the at least one heating device (3), and/or the at least one heating device (3) is a heat exchanger (4) which can be traversed by flow of cooling liquid and/or is an electric resistance heating device (5), for example PTC heating device (6), and/or a separation means for zone separation of the at least one heating direction (3) is arranged on each adapter cover (7), in particular integrally on each adapter cover (7).

2. A method for producing vehicle air-conditioning systems (1) as claimed in claim 1, with different heating devices (3), having the steps:
- providing a housing (2),
- fastening different heating devices (3) of different size and/or shape to the housing (2), **characterised in that** the different heating devices (3) are fastened to an identical housing (2), wherein, during the production of a vehicle air-conditioning system (1), at least one heating device (3) is inserted into an insertion opening (17) on the housing (2), and the at least one heating device (3) is subsequently fastened to the housing (2) and wherein, during the production of a vehicle air-conditioning system (1), the at least one heating device (3) is fastened to the housing (2) by virtue of the at least one heating device (3) being fastened, in particular in a positive and/or non-positive manner, to a fastening geometry (9) of two adapter covers (7) and the two adapter covers (7) being fastened to the housing (2), and/or, during the production of a vehicle air-conditioning system (1), two insertion openings (17) are closed off, preferably in a fluid-tight manner, by means of in each case one adapter cover (7), wherein, during the production of a vehicle air-conditioning system (1), the at least one heating device (3) is fastened to the housing (2) by means of two adapter covers (7).

3. The method as claimed in claim 2, **characterised in that** adapter covers (7) with different fastening geometries (9) and identical fastening interfaces (16) are provided, and/or different heating devices (3) are fastened to the housing (2) by means of different adapter covers (7) and the different adapter covers (7) have different fastening geometries (9).

4. The method as claimed in claim 3, **characterised in that** the different adapter covers (7) are fastened with a fastening interface (16) to an identical counterpart fastening interface (18) on the identical housing (2), and the fastening interfaces (16) of the different adapter covers (7) are identical.

## Revendications

1. Système de climatisation (1) d'un véhicule automobile, comprenant
- un carter (2),
- un ventilateur,
- au moins un dispositif de chauffage (3),
où le dispositif de chauffage (3) au moins au nombre de un est fixé sur le carter (2) exclusivement par au moins un couvercle d'adaptateur (7), où le couvercle d'adaptateur (7) au moins au nombre de un ferme à chaque fois, de préférence de manière fluidiquement étanche, une ouverture d'insertion (17) formée sur le carter (2) prévu pour le dispositif de chauffage (3) au moins au nombre de un,
**caractérisé en ce que** le carter (2) présente deux ouvertures d'insertion (17) fermées à chaque fois par un couvercle d'adaptateur (7), où chacun des couvercles d'adaptateur (7) présente au moins une géométrie de fixation (9) servant à la fixation, sur le couvercle d'adaptateur (7), du dispositif de chauffage (3) au moins au nombre de un, ladite fixation étant réalisée par complémentarité de forme et / ou par action de force, la géométrie de fixation (9) au moins au nombre de un étant configurée, en particulier, en étant complémentaire du dispositif de chauffage (3) au moins au nombre de un, et / ou le dispositif de chauffage (3) au moins au nombre de un est un échangeur de chaleur (4) pouvant être traversé par un liquide de refroidissement et / ou est un dispositif de chauffage (5) à résistance électrique, par exemple un dispositif de chauffage - CTP - à coefficient de température positif (6) et / ou une pièce de séparation servant à la séparation de zones du dispositif de chauffage (3) au moins au nombre de un est disposée sur chaque couvercle d'adaptateur (7), en particulier en formant une seule et même pièce sur chaque couvercle d'adaptateur (7).

2. Procédé de fabrication de systèmes de climatisation (1) de véhicules automobiles selon la revendication 1, comprenant des dispositifs de chauffage (3) différents, ledit procédé comprenant les étapes consistant :
- à fournir un carter (2),
- à fixer, sur le carter (2), des dispositifs de chauffage (3) différents ayant une taille et / ou une forme différente,
**caractérisé en ce que** les dispositifs de chauffage (3) différents sont fixés sur un carter identique (2), où, au cours de la fabrication d'un système de climatisation (1) d'un véhicule automobile, au moins un dispositif de chauffage (3) est introduit dans une ouverture d'insertion (17) formée sur le carter (2) et, ensuite, le dispositif de chauffage (3) au moins au nombre de un est fixé sur le carter (2), et où, au cours de la fabrication d'un système de climatisation (1) d'un véhicule automobile, le dispositif de chauffage (3) au moins au nombre de un est fixé sur le carter (2), tandis que le dispositif de chauffage (3) au moins au nombre de un est fixé, en particulier par complémentarité de forme et / ou par action de force, sur une géométrie de fixation (9) de deux couvercles d'adaptateur (7), et les deux couvercles d'adaptateur (7) sont fixés sur le carter (2) et / ou, au cours de la fabrication d'un système de climatisation (1) d'un véhicule automobile, deux ouvertures d'insertion (17) sont fermées à chaque fois, de préférence de manière fluidiquement étanche, par un couvercle d'adaptateur (7) où, au cours de la fabrication d'un système de climatisation (1) d'un véhicule automobile, le dispositif de chauffage (3) au moins au nombre de un est fixé sur le carter (2), par deux couvercles d'adaptateur (7).

3. Procédé selon la revendication 2, **caractérisé en ce que** sont fournis des couvercles d'adaptateur (7) ayant des géométries de fixation (9) différentes et des interfaces de fixation (16) identiques, et / ou des dispositifs de chauffage (3) différents ayant des couvercles d'adaptateur (7) différents sont fixés sur le carter (2), et les couvercles d'adaptateur (7) différents présentent une géométrie de fixation (9) différente.

4. Procédé selon la revendication 3, **caractérisé en ce que** les couvercles d'adaptateur (7) différents ayant une interface de fixation (16) sont fixés, sur le carter identique (2), au niveau d'une interface de contre-fixation identique (18), et les interfaces de fixation (16) des couvercles d'adaptateur (7) différents sont identiques.
